(19) Europäisches Patentamt
European Patent Office
Office européen des brevets

(11) Veröffentlichungsnummer: **0 042 500**
**B1**

(12) **EUROPÄISCHE PATENTSCHRIFT**

(45) Veröffentlichungstag der Patentschrift: **23.11.83**

(51) Int. Cl.³: **C 09 D 3/80,** B 05 D 7/26

(21) Anmeldenummer: **81104112.8**

(22) Anmeldetag: **29.05.81**

(54) **Einbrennlack.**

(30) Priorität: **20.06.80 DE 3022996**

(43) Veröffentlichungstag der Anmeldung: **30.12.81 Patentblatt 81/52**

(45) Bekanntmachung des Hinweises auf die Patenterteilung: **23.11.83 Patentblatt 83/47**

(84) Benannte Vertragsstaaten: **AT BE CH DE FR GB IT LI NL SE**

(56) Entgegenhaltungen:
**DE - B - 3 022 996**
**GB - A - 725 468**
**GB - A - 1 153 554**

(73) Patentinhaber: **BASF Farben + Fasern Aktiengesellschaft, Am Neumarkt 30, D-2000 Hamburg 70 (DE)**

(72) Erfinder: ***Möller, Dieter, Dipl.-Chem, Berentrup 5,* D-4715 Ascheberg (DE)**
Erfinder: **Poth, Ulrich, Albachtener Strasse 53, D-4400 Münster (DE)**

(74) Vertreter: **Habbel, Hans-Georg, Dipl.-Ing., Postfach 3429 Am Kanonengraben 11, D-4400 Münster (DE)**

**EP 0 042 500 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Einbrennlack

Die Erfindung betrifft einen Einbrennlack auf der Basis von Acrylatpolymeren in organischen Lösungsmitteln mit gegebenenfalls farbgebenden Pigmenten und/oder Füllstoffen, enthaltend ein Acrylatpolymer A, das ein Mischpolymerisat aus copolymerisierbaren, äthylenisch ungesättigten Verbindungen mit freien Carboxylgruppen aus einpolymerisierten, α,β-äthylenisch ungesättigten Carbonsäuren ist, wobei ein Teil der freien Carboxylgruppen mit einem Glycerinrest, der noch andere Fettsäurereste in Esterbildung enthält, verestert ist, und ein weiteres Bindemittel B.

Acrylatharze sind bereits schon als Bindemittel in Einbrennlacken für Kühlschränke, Waschmaschinen und Küchenmaschinen (Haushaltsgeräte) vorgeschlagen worden und zeichnen sich durch eine Reihe vorteilhafter Eigenschaften aus. Ihr Nachteil liegt jedoch darin, dass derartige Einbrennlacke auf dem Kraftfahrzeugsektor begrenzte Aussenbeständigkeit besitzen und die Korrosionsfestigkeit nicht allen geforderten Bedingungen entspricht.

Aus der GB-A Nr. 1153554 sind Acrylpolymere bekannt, die dem obengenannten Acrylpolymer A entsprechen, und auf Seite 2, Zeilen 115 ff. dieser Patentschrift ist angegeben, dass die dort beschriebenen Einbrennlacke vorzugsweise als zusätzliche Komponente wenigstens ein weiteres Harz enthalten, das in dem verwendeten organischen Lösungsmittel löslich ist und das unterschliedlich ist von dem Acrylpolymer A. Als geeignet werden Alkydharze, Epoxidharze, Phenoplastkondensate und insbesondere Aminoplastkondensate bezeichnet. Ein Hinweis auf bestimmte Epoxidharze wird jedoch nicht gegeben.

Überraschenderweise wurde nun gefunden, dass Einbrennlacke mit überragender Aussenbeständigkeit und Korrosionsfestigkeit erhalten werden, wenn diese ein Acrylpolymer A, bei dem bestimmte Mengen an freier Carbonsäure und an mit dem Glycerinrest veresterter Carbonsäure vorliegen, in Kombination mit einem epoxidgruppenhaltigen Polymerisat B enthalten.

Gegenstand der Erfindung ist daher ein Einbrennlack der eingangs genannten Art, der dadurch gekennzeichnet ist, dass das Bindemittel B ein Polymerisat aus einer α,β-äthylenisch ungesättigten Carbonsäure und gegebenenfalls anderen copolymerisierbaren, äthylenisch ungesättigten Verbindungen ist, deren Carboxylgruppen vollständig mit einem Rest verestert sind, der mindestens eine Epoxidgruppe enthält, wobei die Anzahl der Epoxidgruppen so gewählt ist, dass ein Epoxidäquivalentgewicht zwischen 120 und 2000 vorhanden ist, mit der Massgabe, dass je Epoxidgruppe des Acrylatpolymeren B 0,5 bis 1,5 Carboxylgruppen des Acrylatpolymeren A vorgesehen sind.

In einer besonders vorteilhaften Ausführungsform ist das Verhältnis des Acrylatpolymeren A zum Acrylatpolymer B in dem Einbrennlack so vorgesehen, dass auf 1 Epoxidgruppe des Acrylatpolymeren B 0,9 bis 1,1 Carboxylgruppen des Acrylatpolymeren A kommen.

Das Acrylatpolymer A im Sinne dieser Erfindung ist ein Mischpolymerisat aus copolymerisierbaren, äthylenisch ungesättigten Verbindungen mit freien Carboxylgruppen aus einpolymerisierter, α,β-äthylenisch ungesättigter Carbonsäure, wobei ein Teil der freien Carboxylgruppen mit einem Glycerinrest, der noch andere Fettsäurereste in Esterbindung enthält, verestert ist. Diese Veresterung ist so vorgesehen, dass auf 1000 g Acrylatpolymer 0,5 bis 3 mol freie, α,β-äthylenisch ungesättigte Carbonsäure kommen.

Als α,β-äthylenisch ungesättigte Carbonsäuren eignen sich insbesondere Acrylsäure und Methacrylsäure, ferner Maleinsäure, Fumarsäure, Itaconsäure und Mesaconsäure sowie die Halbester der Maleinsäure und Fumarsäure mit aliphatischen Alkoholen, wie Äthyl-, n-Propyl-, Isopropyl-, n-Butyl-, Isobutyl-, tert.-Butylalkohol und 2-Äthylhexylalkohol. Auch Gemische von Carbonsäuren und/oder Halbestern sind geeignet.

Seitens der anderen copolymerisierbaren, äthylenisch ungesättigten Verbindung eignen sich Styrol, Vinyltoluol, Alkylester und Oxyalkylester der Acrylsäure und Methacrylsäure, ferner Acrylonitril, Methacrylonitril, Acrylsäureamide, Methacrylsäureamide, Vinylacetat, Maleinsäurediester, Vinylpropionat, Vinylstearat, Vinylidenchlorid, N-Vinylharnstoff, N-Vinyl-N'-oxaalkylharnstoffe und N-Vinylpyrrolidon. Auch Gemische dieser Verbindungen sind geeignet.

Der zum Verestern vorgesehene, sich vom Glycerin ableitende Rest entspricht den allgemeinen Formeln:

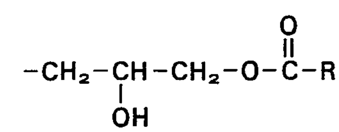

oder

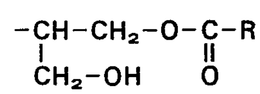

worin R einen gesättigten und/oder ungesättigten aliphatischen Kohlenwasserstoffrest mit 1 bis 26 C-Atomen oder eine verzweigte Kette der Formel:

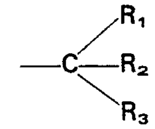

bedeutet.

$R_1$, $R_2$, $R_3$ können H oder gesättigte und/oder ungesättigte aliphatische Kohlenwasserstoffreste mit gerader Kette von 1 bis 12 C-Atomen sein.

Solche Mischpolymerisate und deren Herstellung sind beispielsweise beschrieben in der GB-PS Nr. 1009217, der FR-PS Nr. 1399037 und der DE-PS Nr. 1644822.

Das Acrylatpolymerisat B im Sinne der Erfindung ist ein Polymerisat aus einer α,β-äthylenisch ungesättigten Carbonsäure und gegebenenfalls anderen copolymerisierbaren, äthylenisch ungesättigten Verbindungen, deren Carboxylgruppen vollständig mit einem Rest verestert sind, der mindestens eine Epoxidgruppe enthält, wobei die Anzahl der Epoxidgruppen so gewählt ist, dass ein Epoxidäquivalent zwischen 120 und 2000 vorhanden ist.

Als α,β-äthylenisch ungesättigte Carbonsäuren und als andere copolymerisierbare, äthylenisch ungesättigte Verbindungen eignen sich ebenfalls die unter Acrylatpolymerisat A beschriebenen.

Das Einführen des Restes, der mindestens eine Epoxidgruppe enthält, in die Carboxylgruppen über Esterverknüpfung geschieht mit den üblichen Methoden der Polymerisationstechnik, vorteilhafterweise durch Polymerisation von Estern der vorstehend definierten, α,β-äthylenisch ungesättigten Carbonsäuren mit Hydroxylgruppen haltigen Epoxidverbindungen.

Als besonders vorteilhaft geeignete Ester der α,β-äthylenisch ungesättigten Carbonsäuren mit Hydroxylgruppen haltigen Epoxidverbindungen seien beispielsweise genannt Glycidylacrylat und Glycidylmethacrylat.

In bevorzugter Weise wird ein Acrylatpolymerisat B erhalten durch Polymerisation von Glycidylacrylat und/oder Glycidylmethacrylat. Andere copolymerisierbare, äthylenisch ungesättigte Verbindungen können mit einpolymerisiert werden. Je nach den gewünschten Eigenschaften des Polymerisats B wird man gegebenenfalls andere copolymerisierbare, äthylenisch ungesättigte Verbindungen als Comonomer bei der Polymerisation von Glycidylacrylat und/oder Glycidylmethacrylat auswählen.

Neben den Acrylatpolymeren A und B und organischen Lösungsmitteln können die Einbrennlacke übliche Mengen der bei einschlägigen Einbrennlacken üblichen Zusatzstoffe enthalten, etwa Mittel zur Verbesserung des Verlaufs und des Glanzes, Pigmente, Füllstoffe, lösliche Farbstoffe, Lichtstabilisatoren und Härtungskatalysatoren.

Die erfindungsgemässen Einbrennlacke eignen sich zum Herstellen hochwertiger Einbrennlackierungen, insbesondere auf solchen grundierten oder nicht grundierten Metallen oder Werkstoffen, die in der Kraftfahrzeugindustrie, insbesondere für Karosserien verwendet werden. Sie zeichnen sich aus durch eine völlige Aushärtung unter Vernetzung der Filme, wenn sie bei Temperaturen von 130 bis 200°C in einer Zeitspanne von 40 min bis herab zu 10 min eingebrannt sind.

Die Einbrenndauer steht in Abhängigkeit zur Einbrenntemperatur und kann bei Anwendung höherer Einbrenntemperaturen als 200°C noch weiter reduziert werden. Dies ist insbesondere bei der Infrarottrocknung der Fall.

Aus diesen Einbrennlacken erhaltene Lackierungen weisen neben einer ausgezeichneten Wetterfestigkeit einen hervorragenden Korrosionsschutz und gute Chemikalienbeständigkeit auf.

Pigmente lassen sich aufgrund der guten Benetzungseigenschaften der Mischpolymerisate leicht in die Einbrennlacke einarbeiten. Sie besitzen eine ausgezeichnete Lagerstabilität.

Die in den Beispielen genannten Teile und Prozente beziehen sich auf das Gewicht.

*Beispiel 1 (Herstellung eines Acrylatpolymeren A)*

In einem Reaktionsgefäss werden unter Rühren und unter Einleiten von Inertgas (Kohlendioxid oder Stickstoff) 900 Teile Xylol unter Rückfluss zum Sieden erhitzt. In das siedende Xylol lässt man innerhalb 3 h gleichmässig eine Mischung von

480 Teilen Styrol,
134 Teilen Methacrylsäure,
298 Teilen Butylacrylat, und
30 Teilen Dibenzoylperoxid
(75% Peroxid, 25% Wasser)

einlaufen. Danach gibt man eine Mischung von

288 Teilen Epoxidester,
50 Teilen Xylol, und
12 Teilen Dibenzoylperoxid (75%ig)

hinzu und hält weiter am Sieden, bis die Säurezahl konstant bleibt. Auf diese Weise erhält man nach dem Filtrieren eine blanke Lösung eines Mischpolymerisatkondensates, die nach dem Verdünnen auf einen Feststoffgehalt von 50% mit n-Butanol eine Säurezahl von 31, bezogen auf das Festharz, aufweist.

Als Epoxidester wird ein handelsübliches Glycidestergemisch (Cardura E der Firma Deutsche Shell AG) verwendet, dessen Säurerest vorwiegend aus einer tertiären Carbonsäure der Formel:

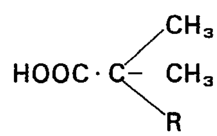

besteht, bei der R einen Kohlenwasserstoffrest mit einer geraden aliphatischen Kette, die zwischen 1 und 11 C-Atome besitzt, darstellt. Das Epoxidäquivalentgewicht des Glycidestergemisches liegt bei 245.

*Beispiel 2 (Herstellung eines Acrylatpolymeren A)*

Beispiel 1 wird wiederholt mit dem Unterschied, dass 177 Teile Methacrylsäure und 255 Teile Butylacrylat eingesetzt werden. Es wird eine Harzlösung erhalten, die nach dem Verdünnen auf einen Festkörpergehalt von 50% mit n-Butanol eine Säurezahl von 52, bezogen auf das Festharz, aufweist.

*Beispiel 3 (Herstellung eines Acrylatpolymeren A)*

A. In einem 4-l-Dreihalskolben werden 1850 Teile Epoxidester unter Einleiten von Stickstoff und unter Rühren auf 120°C erhitzt. Innerhalb 3 h lässt man hierzu 650 Teile Methacrylsäure fliessen, wobei die Temperatur konstant auf 120°C gehalten wird. Nach Beendigung der Reaktion wird schnell abgekühlt. Man erhält ein Addukt mit einer Säurezahl von weniger als 10.

B. In einem Rührgefäss werden 900 Teile Xylol unter Inertgas und unter Rückfluss zum Sieden erhitzt. Aus einem Tropftrichter lässt man dann innerhalb 3 h eine Mischung von

480 Teilen Styrol,
389 Teilen des unter A beschriebenen Adduktes,
235 Teilen Methylmethacrylat,
101 Teilen Methacrylsäure, und
30 Teilen Dibenzoylperoxid (75%ig)

in das siedende Xylol tropfen. Dann hält man das Reaktionsgemisch noch weiter am Sieden, bis ein Feststoffgehalt von 54 bis 55% erreicht ist. Danach wird abgekühlt, filtriert, und mit n-Butanol auf einen Festkörpergehalt von 50% eingestellt.

Die Säurezahl des Festharzes beträgt 61,5.

*Beispiel 4 (Herstellung eines Acrylatpolymeren B)*

In einen Vierhalskolben mit Rühren, Thermometer, Schutzgaseinleitungsrohr, Rückflusskühler und Dosiergefäss mit elektrischer Widerstandsheizung beheizbar, werden 800 g eines Aromatengemisches (Siedebereich 156-172°C) eingewogen und auf 140°C erhitzt. Dann wird aus dem Dosiergefäss eine vorbereitete Mischung aus 180 g Styrol, 240 g Glycidylmethacrylat, 360 g n-Butylmethacrylat, 420 g n-Butylacetat und 14,5 g Ditert.-Butylperoxid innerhalb 3 h gleichmässig zudosiert und die Temperatur bei 140°C gehalten. Nach weiteren 30 min bei 140°C werden 3,6 g Ditert.-Butylperoxid in 4 g des genannten Aromatengemisches gelöst, zugegeben und weitere 1,5 h polymerisiert. Es resultiert eine Acrylatharzlösung mit einem Festgehalt von 60% (gemessen im Umluftofen 15 min bei 180°C), einem Epoxidäquivalentgewicht von 709, bezogen auf das Festharz, und einer Viskosität von 510 mPa·s, gemessen bei 25°C im ICI-Viskosimeter.

*Beispiel 5 (Herstellung eines Acrylatpolymeren B)*

Beispiel 4 wird wiederholt mit dem Unterschied, dass anstelle von 240 g Glycidylmethacrylat 320 g und anstelle 420 g n-Butylacrylat 336 g eingesetzt werden. Man erhält eine Acrylatharzlösung mit einem Festkörpergehalt von 60%, einem Epoxidäquivalentgewicht von 526, bezogen auf das Festharz, und einer Viskosität von 740 mPa·s, gemessen bei 25°C im Platte/Kegel-Viskosimeter.

*Beispiel 6*

30,0 Teile der nach Beispiel 5 erhaltenen 60%igen Lösung des Acrylatpolymeren B,

5,5 Teile Glykolmono-n-butyläther,

0,3 Teile eines Verdickungsmittels (Anteigung von 10 Teilen eines quaternäre organische Ammoniumbasen enthaltenden Montmorillonits--Bentone-in 90 Teilen Xylol),

0,2 Teile feinteiliges Kieselsäure-Aerogel,

26,0 Teile Titandioxid-Pigment (Rutil-Type)

werden auf der Kugelmühle oder Sandmühle oder einem anderen, in der Lackindustrie üblichen Dispergieraggregat bis zu einer Kornfeinheit von < 5 µm vermahlen. Zu dieser Mahlung gibt man dann weitere

35,0 Teile der nach Beispiel 1 erhaltenen 50%igen Lösung des Acrylatpolymeren A,

1,5 Teile einer Zinkoctoatlösung in Xylol (42% Festkörper),

1,5 Teile einer 5%igen Silikonöllösung in Xylol.

Zur Prüfung der Lagerbeständigkeit wird der erhaltene Einbrennlack 8 Wochen bei 50°C gelagert. Die Ausgangskonsistenz aus einem Auslaufbecher nach DIN 53 211 mit 4 mm Durchmesser von 50 s veränderte sich nur unbedeutend.

Zur Applikation wird der erhaltene Einbrennlack mit 8 Teilen Xylol und 2 Teilen Butylglykol so weit verdünnt, bis die Auslaufzeit aus einem Auslaufbecher nach DIN 53 211 mit einer Düse von 4 mm Durchmesser etwa 30 s beträgt. Mittels einer Spritzpistole (3 atü) wird dann ein Karosserieblech beschichtet, das einen durch Einbrennen gehärteten Einbrennfüller auf Alkydmelaminharz-Basis enthält.

Der Film wird bei 135°C 30 min lang in einem Umluftofen eingebrannt. Die Trockenschicht des Überzuges beträgt 40 bis 50 µm. Der Überzug ist hochglänzend.

Die Pendelhärte nach König beträgt mehr als 150 s. Der Glanzgrad nach Gardner bei einem 20°-Messkopf liegt über 80%.

Im Xenotest 1200 wurde 1200 h bewittert. Der Glanzabfall wurde gemessen. Der Glanzgrad nach Gardner (20°-Messkopf) betrug nach

200 h 77%
400 h 77%
800 h 73%
1200 h 58%

In dieser Zeit fällt der Glanzgrad eines üblichen Alkydharz/Melaminharz-Einbrennlackes von 70% Anfangsglanzgrad auf 7% ab.

Der Überzug ist ferner beständig gegen Salzsäure und Schwefelsäure. Gemessen wurde eine 96stündige Einwirkung von 10%iger Salzsäure und 10%iger Schwefelsäure.

*Beispiel 7*

Beispiel 6 wird wiederholt mit dem Unterschied, dass anstelle des nach Beispiel 5 hergestellten Acrylatpolymeren B das nach Beispiel 4 erhaltene Acrylatpolymer B und anstelle des nach Beispiel 1 hergestellten Acrylatpolymeren A das nach Beispiel 2 erhaltene Acrylatpolymer A eingesetzt wird. Die erhaltenen Ergebnisse entsprechen denen des Beispiels 6.

**Patentansprüche**

1. Einbrennlack auf der Basis von Acrylatpolymeren in organischen Lösungsmitteln mit gegebenenfalls farbgebenden Pigmenten und/oder Füllstoffen, enthaltend ein Acrylatpolymer A, das ein Mischpolymerisat aus copolymerisierbaren, äthylenisch ungesättigten Verbindungen mit freien Carboxylgruppen aus einpolymerisierten, α,β-äthylenisch ungesättigten Carbonsäuren ist, wobei ein Teil der freien Carboxylgruppen mit einem Glycerinrest, der noch andere Fettsäurereste in Esterbindung enthält, derart verestert ist, dass auf 1000 g Acrylpolymer 0,5 bis 3 mol freie, α,β-äthylenisch ungesättigte Carbonsäure und 0,6 bis 2 mol mit dem Glycerinrest veresterte, α,β-äthylenisch ungesättigte Carbonsäure kommen, und ein

weiteres Bindemittel B, dadurch gekennzeichnet, dass das Bindemittel B ein Polymerisat aus einer α,β-äthylenisch ungesättigten Carbonsäure und gegebenenfalls anderen copolymerisierbaren, äthylenisch ungesättigten Verbindungen ist, deren Carboxylgruppen vollständig mit einem Rest verestert sind, der mindestens eine Epoxidgruppe enthält, wobei die Anzahl der Epoxidgruppen so gewählt ist, dass ein Epoxidäquivalentgewicht zwischen 120 und 2000 vorhanden ist, mit der Massgabe, dass je Epoxidgruppe des Acrylatpolymeren B 0,5 bis 1,5 Carboxylgruppen des Acrylatpolymeren A vorgesehen sind.

2. Verfahren zum Herstellen eines Überzuges durch Aufbringen eines Einbrennlackes auf der Basis von Acrylpolymeren in organischen Lösungsmitteln gegebenenfalls mit farbgebenden Pigmenten und/oder Füllstoffen auf ein Substrat und Härten des Überzuges durch Einbrennen bei höheren Temperaturen, wobei der Einbrennlack ein Acrylpolymer A, das ein Mischpolymerisat aus copolymerisierbaren, äthylenisch ungesättigten Verbindungen mit freien Carboxylgruppen aus einpolymerisierten, α,β-äthylenisch ungesättigten Carbonsäuren ist, wobei ein Teil der freien Carboxylgruppen mit einem Glycerinrest, der noch andere Fettsäurereste in Esterbindung enthält, derart verestert ist, dass auf 1000 g Acrylpolymer 0,5 bis 3 mol freie, α,β-äthylenisch ungesättigte Carbonsäure und 0,6 bis 2 mol mit dem Glycerinrest veresterte, α,β-äthylenisch ungesättigte Carbonsäure kommen, und ein weiteres Bindemittel B enthält, dadurch gekennzeichnet, dass das Bindemittel B ein Polymerisat aus einer α,β-äthylenisch ungesättigten Carbonsäure und gegebenenfalls anderen copolymerisierbaren, äthylenisch ungesättigten Verbindungen ist, deren Carboxylgruppen vollständig mit einem Rest verestert sind, der mindestens eine Epoxidgruppe enthält, wobei die Anzahl der Epoxidgruppen so gewählt ist, dass ein Epoxidäquivalentgewicht zwischen 120 und 2000 vorhanden ist, mit der Massgabe, dass je Epoxidgruppe des Acrylatpolymeren B 0,5 bis 1,5 Carboxylgruppen des Acrylatpolymeren A vorgesehen sind.

## Claims

1. A baking lacquer based on acrylate polymers in organic solvents, with optionally colouring pigments and/or fillers, containing an acrylate polymer A which is a copolymer of copolymerisable ethylenically unsaturated compounds possessing free carboxyl groups originating from copolymerised α,β-ethylenically unsaturated carboxylic acids, a proportion of the free carboxyl groups being esterified with a glycerol radical, which also contains other fatty acid radicals attached by ester bonds, so that 0.5 to 3 mol of free α,β-ethylenically unsaturated carboxylic acid and 0.6 to 2 mol of α,β-ethylenically unsaturated carboxylic acid esterified with the glycerol radical are employed per 1,000 g of acrylic polymer, and a further binder B, characterised in that the binder B is a polymer of an α,β-ethylenically unsaturated carboxylic acid and, optionally, other copolymerisable, ethylenically unsaturated compounds in which the carboxyl groups are all esterified with a radical which contains at least one epoxide group, the number of epoxide groups being so chosen as to give an epoxide equivalent weight of between 120 and 2,000, with the proviso that 0.5 to 1.5 carboxyl groups of the acrylate polymer A are provided per epoxide group of the acrylate polymer B.

2. A process for the preparation of a coating by applying to a substrate a baking lacquer based on acrylic polymers in organic solvents, optionally with colouring pigments and/or fillers and hardening the coating by baking at elevated temperatures, the baking lacquer containing an acrylic polymer A which is a copolymer of copolymerisable ethylenically unsaturated compounds possessing free carboxyl groups originating from copolymerised α,β-ethylenically unsaturated carboxylic acids, a proportion of the free carboxyl groups being esterified with a glycerol radical which also contains other fatty acid radicals attached by ester bonds, so that 0.5 to 3 mol of free α,β-ethylenically unsaturated carboxylic acid and 0.6 to 2 mol of α,β-ethylenically unsaturated carboxylic acid esterified with the glycerol radical are employed per 1,000 g of acrylic polymer, and a further binder B, characterised in that the binder B is a polymer of an α,β-ethylenically unsaturated carboxylic acid and, optionally, other copolymerisable, ethylenically unsatured compounds, in which the carboxyl groups are all esterified with a radical which contains at least one epoxide group, the number of epoxide groups being so chosen as to give an epoxide equivalent weight of between 120 and 2,000, with the proviso that 0.5 to 1.5 carboxyl groups of the acrylate polymer A are provided per epoxide group of the acrylate polymer B.

## Revendications

1. Email au four à base de polymères d'acrylate dans des solvants organiques, comportant éventuellement des pigments colorants et/ou des charges, contenant un polymère d'acrylate A qui est un polymérisat mixte issu de composés copolymérisables à insaturation éthylénique comportant des groupes carboxyles libres issus d'acides carboxyliques à insaturation éthylénique α, β incorporés par polymérisation, une partie des groupes carboxyles libres étant estérifiée avec un reste glycérinique qui contient encore d'autres restes acides gras en liaison ester, de manière que, pour 1000 g de polymère acrylate, on ait 0,5 à 3 mol d'acide carboxylique libre, à insaturation éthylénique α, β, et 0,6 à 2 mol d'acide carboxylique à insaturation éthylénique α, β estérifié par le reste glycérinique, et un autre liant B, caractérisé par le fait que le liant B est un polymérisat issu d'un acide carboxylique à insaturation éthylénique α, β et, éventuellement, d'autres composés copolymérisables, à insaturation éthylénique, dont les groupes carboxyles sont entièrement estérifiés par un reste qui comprend au moins un groupe époxyde, le nombre des groupes époxydes étant choisi de manière à obtenir un poids d'équivalent époxyde compris entre 120 et 2000, avec la condition que, pour chaque groupe époxyde du polymère d'acrylate B, sont prévus 0,5 à 1,5 groupe carboxyle du polymère d'acrylate A.

2. Procédé de préparation d'un revêtement par application de l'émail au four selon la revendication 1, à base de polymères acryliques dans des solvants organiques, contenant éventuellement des pigments colorants et/ou des charges sur un substrat, et par durcissement du revêtement par cuisson à haute température, l'émail au four étant un polymère acrylique A qui est un polymérisat mixte issu de composés copolymérisables à insaturation éthylénique comportant des groupes carboxyles libres issus d'acides carboxyliques à insaturation éthylénique α, β, incorporés par polymérisation, une partie des groupes carboxyles libres étant estérifiée avec un reste glycérinique qui contient encore d'autres restes acides gras en liaison ester, de manière que, pour 1000 g de polymère acrylate, on ait 0,5 à 3 mol d'acide carboxylique libre, à insaturation éthylénique α, β, et 0,6 à 2 mol d'acide carboxylique à insaturation éthylénique α, β estérifié par le reste glycérinique, et un autre liant B, caractérisé par le fait que le liant B est un polymérisat issu d'un acide carboxylique à insaturation éthylénique α, β et, éventuellement, d'autres composés copolymérisables, à insaturation éthylénique, dont les groupes carboxyles sont entièrement estérifiés par un reste qui comprend au moins un groupe époxyde, le nombre des groupes époxydes étant choisi de manière à obtenir un poids d'équivalent époxyde compris entre 120 et 2000, avec la condition que, pour chaque groupe époxyde du polymère d'acrylate B, sont prévus 0,5 à 1,5 groupe carboxyle du polymère d'acrylate A.